# EUROPÄISCHE PATENTSCHRIFT

(11) **EP 3 571 524 B1**
(45) Veröffentlichungstag und Bekanntmachung des Hinweises auf die Patenterteilung: **29.12.2021**
(21) Anmeldenummer: 18700473.4
(22) Anmeldetag: 08.01.2018
(51) Int. Cl.: G01S 7/497, G01S 7/484, G01J 1/42, G01J 1/44

(54) **ÜBERWACHUNGSVORRICHTUNG EINES LIDARSYSTEMS**
MONITORING DEVICE OF A LIDAR SYSTEM
DISPOSITIF DE SURVEILLANCE D'UN SYSTÈME LIDAR

(30) Priorität: 19.01.2017 DE 102017200803
(43) Veröffentlichungstag der Anmeldung: 27.11.2019
(73) Patentinhaber: Robert Bosch GmbH, 70442 Stuttgart (DE)
(72) Erfinder: WREDE, Martin, 72770 Reutlingen (DE); ADAMS, Rene, 72622 Nuertingen (DE); SCHNITZER, Reiner, 72762 Reutlingen (DE)
(86) Internationale Anmeldenummer: PCT/EP2018/050340
(87) Internationale Veröffentlichungsnummer: WO 2018/134069

(56) Entgegenhaltungen:
- EP-A1- 2 990 826
- EP-A2- 1 291 673
- WO-A1-2005/064273
- JP-A- 2014 102 072
- US-A- 5 923 427
- US-A1- 2002 131 034
- US-A1- 2010 157 279

## Beschreibung

### Stand der Technik

Die vorliegende Erfindung betrifft eine Überwachungsvorrichtung eines Lidarsystems. Außerdem betrifft die Erfindung ein Lidarsystem mit einer Überwachungsvorrichtung. Das Lidarsystem ist insbesondere zum Aussenden von Laserpulsen mit sehr kurzer Pulsdauer ausgebildet.

Aus dem Stand der Technik ist bekannt, Lidarsysteme zu überwachen. Dazu wird eine ausgesandte Lichtleistung des Lidarsystems ermittelt um festzustellen, ob die ausgesandte Lichtleistung einen Schwellwert überschritten hat. Ist dies der Fall, so muss die Lichtleistung reduziert werden, da ansonsten eine Gefährdung von Menschen, beispielsweise durch Augenschädigung, auftreten kann. US 2010/0157279 A1 zeigt ein derartiges System.

Bei herkömmlichen Lidarsystemen werden daher langwellige Pulse verwendet, um die Lichtleistung optimal bestimmen zu können. Allerdings kann es hinsichtlich eines Detektors, der die von Objekten in der Umgebung reflektierten Laserstrahlen erkennt, vorteilhaft sein, wenn möglichst kurze Pule vorhanden sind. Unter kurzen Pulsen werden insbesondere solche Pulse verstanden, die eine Dauer von maximal 10 ns aufweisen.

Wird versucht, ein Signal mit kurzen Pulsen von analog zu digital zu wandeln, was für die Bestimmung der Lichtleistung notwendig ist, so treten erhebliche Schwierigkeiten und Ungenauigkeiten auf. Dies führt dazu, dass seine zuverlässige Funktionsüberwachung nicht mehr gewährleistet werden kann. Daher wird auf die Verwendung kurzer Laserpulse bei Lidarsystemen, die insbesondere für die Verwendung in Fahrzeugen vorgesehen sind, verzichtet.

### Offenbarung der Erfindung

Die erfindungsgemäße Überwachungsvorrichtung erlaubt ein zuverlässiges Überwachen eines Lidarsystems. Insbesondere ist das Bestimmen einer Lichtleistung möglich, selbst wenn kurze Pulse vorhanden sind. Gleichzeitig ist die Überwachungsvorrichtung einfach und kostengünstig aufgebaut. Schließlich ist insbesondere ein Testen der Überwachungsvorrichtung zu jeder Zeit möglich.

Die erfindungsgemäße Uberwachungsvorrichtung zur Funktionsüberwachung eines Lidarsystems umfasst einen Detektor und eine Regelschleife. Der Detektor ist zum Detektieren von Laserlicht und zum Generieren eines Referenzsignals aus dem Laserlicht ausgebildet. Das Referenzsignal ist insbesondere ein elektrisches Signal und repräsentiert eine durch den Detektor erfasste Lichtleistung des Laserlichts. Die Regelschleife ist zum Minimieren einer Differenz zwischen einer Amplitude des Referenzsignals und einer Amplitude eines Stellsignals ausgebildet. Dazu wird bevorzugt das Stellsignal variiert. Somit wird in der Überwachungsvorrichtung nicht versucht, einen einzelnen Puls zu quantisieren, sondern es wird eine Regelung bevorzugt über mehrere Pulse durchgeführt. Die Regelung minimiert die Differenz zwischen der Amplitude des Referenzsignals und der Amplitude des Stellsignals, sodass die Amplitude des Stellsignals schließlich der Amplitude des Referenzsignals entspricht. Sobald die Regelschleife eingeschwungen ist, steht somit stets in Form des Stellsignals eine Größe zur Verfügung, die als der Messwert der Amplitude eines Pulses des Laserlichts angesehen werden kann. Somit sind auf Amplituden von sehr kurzen Pulsen, insbesondere von Pulsen mit einer Breite von weniger als 10 ns, ermittelbar.

Die Unteransprüche zeigen bevorzugte Weiterbildungen der Erfindung.

Die Regelschleife weist einen Komparator zum Ermitteln einer Differenz zwischen dem Referenzsignal und dem Stellsignal auf. Insbesondere ist der Komparator zum Durchführen einer Subtraktion der Amplitude des Referenzsignals und der Amplitude des Stellsignals ausgebildet. Des Weiteren umfasst die Regelschleife bevorzugt eine Regeleinheit zum Verändern des Stellsignals in Abhängigkeit der Differenz, die von dem Komparator ermittelt wurde. Das Stellsignal stellt somit die Stellgröße innerhalb der Regelschleife dar. Die Regeleinheit dient insbesondere zum Minimieren besagter Differenz, wobei die Regeleinheit hierzu ein bekanntes Verfahren Verändern des Stellsignals verwendet. Solche Verfahren sind insbesondere das Newton-Verfahren und/oder das Runge-Kutta-Verfahren. Diese Verfahren haben den Vorteil, dass eine schnelle Konvergenz erreicht werden kann. Die Regelschleife benötigt daher nur eine kurze Zeit, um den Einschwingvorgang abzuschließen.

Besonders vorteilhaft ist die Regeleinheit eingerichtet, durch Verändern des Stellsignals die Differenz auf den Wert Null einzustellen. Somit konvergiert die Amplitude des Stellsignals auf denjenigen Wert, den auch die Amplitude des Referenzsignals beträgt. Dadurch kann anhand der Amplitude des Stellsignals erkannt werden, wie groß die Amplitude des Referenzsignals ist. Das Stellsignal dient somit als Messgröße für die Amplitude des Referenzsignals. Dazu ist das Stellsignal bevorzugt konstant, sodass die Amplitude des Stellsignals durch einen konstanten Wert abgebildet ist.

Die Regeleinheit ist bevorzugt zum Ausgeben eines digitalen Signals ausgebildet. Das digitale Signal ist von einem digital-analog-Wandler in das Stellsignal wandelbar. Somit liegt mit dem digitalen Signal bereits eine digitale Repräsentation der Amplitude des Referenzsignals vor, insbesondere sobald die Regelschleife eingeschwungen ist. Damit sind eine aufwändige oder unmögliche Messung der Amplitude des Referenzsignals sowie eine zugehörige analogdigital-Wandlung nicht notwendig.

Erfindungsgemäß ist außerdem ein Zusatzkomparator vorgesehen. Der Zusatzkomparator dient zum Ermitteln einer Differenz zwischen dem Referenzsignal und des in seiner Amplitude halbierten Stellsignals. Wiederum ist bevorzugt, dass das Stellsignal eine konstantes Signal ist, sodass die Differenz lediglich ein Verschieben des Referenzsignals in Amplitudenrichtung bewirkt. Dies erfolgt insbesondere um die halbe Amplitude des Stellsignals. Insbesondere ist vorgesehen, dass die Pulsbreite als diejenige Zeit bestimmt wird, die nach dem Ansteigen eines Signals bis auf die halbe Amplitude und vor dem Abfallen des Signals bis auf die halbe Amplitude vergeht. Durch den Zusatzkomparator ist somit ein Pulsbreitensignal bestimmt, das eine Pulsbreite des Referenzsignals anzeigt. Insbesondere ist das Pulsbreitensignal nur für die Dauer der Pulsbreite gemäß obiger Definition vorhanden.

Besonders vorteilhaft ist eine Pulsbreitenabschätzungseinheit vorhanden. Die Pulsbreitenabschätzungseinheit dient zum Zählen einer Anzahl einer vordefinierten Zeiteinheit, die ein Puls des Pulsbreitensignals an der Pulsbreitenabschätzungseinheit anliegt. Somit wird die Pulsbreite als Vielfaches der vordefinierten Zeiteinheit bestimmt. Außerdem ist die Pulsbreitenabschätzungseinheit zum Ausgeben eines BCD-Zählercodes ausgebildet, der die Anzahl der vordefinierten Zeiteinheiten anzeigt. Somit ist anhand des BCD-Zählercodes die Pulsbreite berechenbar, indem die Länge der vordefinierten Zeiteinheit mit der Anzahl an vordefinierten Zeiteinheiten multipliziert wird. Die Pulsbreitenabschätzungseinheit weist besonders vorteilhaft eine Vielzahl von hintereinandergeschalteten Testeinheiten auf. Dabei ist vorgesehen, dass jede Testeinheit zum Ausgeben eines binären Signals, ob der Puls nach Abwarten der vordefinierten Zeiteinheit weiterhin an der Pulsbreitenabschätzungseinheit anliegt ausgebildet ist. Der BCD-Zählercode ist vorteilhafterweise aus den binären Signalen der Testeinheiten zusammengesetzt. Durch die Hintereinanderschaltung summiert sich die vordefinierte Zeiteinheit auf. Dies bedeutet, dass eine erste Testeinheit in der Hintereinanderschaltung überprüft, ob das Pulsbreitensignal nach der vordefinierten Zeiteinheit an der Pulsbreitenabschätzungseinheit anliegt. Ist dies der Fall, so wird eine binäre 0, andernfalls eine binäre 1 ausgegeben, die jeweils einen ersten Wert des BCD-Zählercodes bilden. Anschließend überprüft die nächste Testeinheit in der Hintereinanderschaltung nach erneutem Abwarten der vordefinierten Zeiteinheit, ob das Pulsbreitensignal weiterhin anliegt. Dies setzt sich fort, bis alle Testeinheiten die Überprüfung durchgeführt haben. Da jede Testeinheit aber erst dann aktiv wird, wenn sämtliche vorangeschalteten Testeinheiten der Hintereinanderschaltung die Überprüfung abgeschlossen haben, ist die Anzahl an binären 1 und/oder binären 0 innerhalb des BCD-Zählercodes ein Maß für die Pulsbreite, indem deren Anzahl und/oder Verteilung den Multiplikator für die Zeitdauer der vordefinierten Zeiteinheit darstellt.

Weiterhin weist besonders vorteilhaft jede Zähleinheit ein Verzögerungsglied und einen D-Flipflop auf. Das Verzögerungsglied dient zum verzögerten Anlegen eines binären Signals, das das Vorliegen einer ansteigenden Flanke des Pulsbreitensignals anzeigt, an einen Daten-Eingang des D-Flipflops. Die Verzögerung umfasst die Länge der vordefinierten Zeiteinheit. Gleichzeitig wird ein binäres Signal, das das Vorliegen einer fallenden Flanke des Pulsbreitensignals anzeigt, ohne Verzögerung an einen Takt-Eingang des D-Flipflops angelegt. Die Ausgänge aller vorhandener D-Flipflops bilden den BCD-Zählercode. Da das Pulsbreitensignal nur dann vorhanden ist, solange der Puls des Referenzsignals dauert, ist eine Zeit zwischen steigender Flanke und fallender Flanke somit bevorzugt die Pulsbreite. Dies wird durch das D-Flipflop bestimmt. Sollte das verzögerte Binärsignal über die steigende Flanke gleichzeitig mit dem nicht verzögerten Binärsignal über die fallende Flanke an dem D-Flipflop anliegen, so wird ein Ausgang des D-Flipflops auf eine binäre 1 umgeschaltet. Durch die Vielzahl von Zähleinheiten sind eine Vielzahl von Verzögerungsgliedern hintereinandergeschaltet, wobei jedes Verzögerungsglied das binären Signal, das das Vorliegen der ansteigenden Flanke des Pulsbreitensignals anzeigt, verzöget an das jeweilige D-Flipflop der Zähleinheit anlegt. Das binäre Signal, das das Vorliegen der fallenden Flanke des Pulsbreitensignals anzeigt, wird stets unverzögert an das D-Flipflop der Zähleinheit angelegt. Die so ermittelten binären Ergebnise der einzelnen D-Flipflops werden in dem BCD-Zählercode ausgegeben.

Der Detektor dient bevorzugt zum Generieren eines charakteristischen Stromsignals aus dem Laserlicht. Dabei ist vorgesehen, dass das Stromsignal durch einen Transimpedanzwandler zu dem Referenzsignal wandelbar ist. Das Referenzsignal ist somit durch eine veränderliche elektrische Spannung gebildet. Dies vereinfacht das weitere Verarbeiten des Referenzsignals durch den Komparator und den Zusatzkomparator.

Der Detektor umfasst vorteilhafterweise eine pin-Diode und/oder eine Avalanche-Photodiode. Auf diese Weise ist die Überwachungseinheit einfach und aufwandsarm umsetzbar, wobei gleichzeitig ein zuverlässiges Überwachen eines Lidarsystems ermöglicht ist.

Die Erfindung betrifft schließlich ein Lidarsystem. Das Lidarsystem umfasst eine Laserlichtquelle, eine Auskopplungseinheit und eine Überwachungsvorrichtung wie zuvor beschrieben. Dabei ist vorgesehen, dass mittels der Laserlichtquelle kurze Lichtpulse ausgesandt werden. Unter kurzen Lichtpulsen sind insbesondere solche Pulse zu versehen, die eine Dauer von maximal 10 ns, insbesondere von maximal 5 ns, aufweisen. Weiterhin ist vorgesehen, dass das Laserlicht von der Laserlichtquelle durch die Auskopplungseinheit zumindest teilweise zu der Überwachungsvorrichtung leitbar ist.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Abbildung eines Lidarsystems mit einer Überwachungsvorrichtung gemäß einem Ausführungsbeispiel der Erfindung,
- Figur 2: eine schematische Abbildung einer Pulsbreitenabschätzungseinheit der Überwachungsvorrichtung gemäß dem Ausführungsbeispiel der Erfindung,
- Figur 3: eine schematische Abbildung eines Referenzsignals der Überwachungsvorrichtung gemäß einem Ausführungsbeispiel der Erfindung, und
- Figur 4: eine schematische Abbildung eines Stellsignals der Überwachungsvorrichtung gemäß dem Ausführungsbeispiel der Erfindung.

### Ausführungsformen der Erfindung

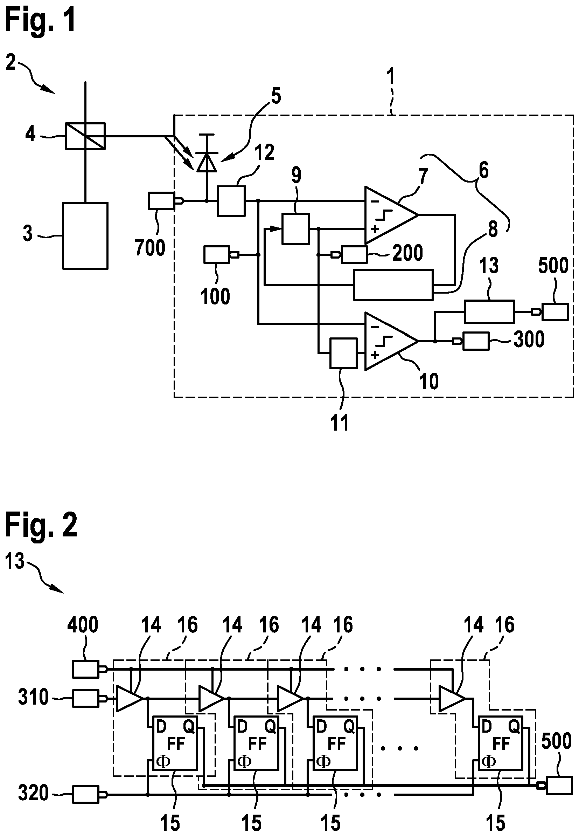

Figur 1 zeigt schematisch ein Lidarsystem 2 mit einer Überwachungsvorrichtung 1 gemäß einem Ausführungsbeispiel der Erfindung. Das Lidarsystem 2 weist eine Laserlichtquelle 3 auf, die zum Aussenden von Laserlicht ausgebildet ist. Insbesondere sind mit der Laserlichtquelle 3 kurze Lichtpulse von maximal 10 ns, insbesondere 5 ns, aussendbar. Solche kurzen Lichtpulse sind vorteilhaft, da diese die Verwendung von kostengünstigen Avalanche-Photodioden als Detektor (nicht gezeigt) erlauben.

Die Überwachungsvorrichtung 1 dient zur Funktionsüberwachung des Lidarsystems 2. Dazu wird über eine Auskoppeleinheit 4 ein Teil des Laserlichts, das von der Laserlichtquelle 3 ausgesandt wurde, zu der Überwachungsvorrichtung 1 geleitet. Insbesondere ist die Auskoppeleinheit 4 eine Linse einer Optik (nicht gezeigt) des Lidarsystems 2.

Die Überwachungsvorrichtung 1 weist einen Detektor 5 auf, der zum Empfangen des Laserlichts sowie zum Generieren eines Referenzsignals 100 aus dem empfangenen Laserlicht ausgebildet ist. Insbesondere generiert der Detektor 5 ein elektrisches Stromsignal, das eine empfangene Lichtleistung wiederspiegelt. In einer vorteilhaften Ausführungsform ist ein Transimpedanzwandler 12 vorgesehen, um das Stromsignal in ein Spannungssignal zu wandeln. Dadurch ist das Referenzsignal 100 ein Spannungssignal, bei dem sich eine elektrische Spannung relativ zu der vom Detektor 5 empfangenen Lichtleistung verändert. Da die Laserlichtquelle 3 zum Aussenden von kurzen Lichtpulsen ausgebildet ist, umfasst auch das Referenzsignal 100 kurze Spannungspulse, die maximal 10 ns, insbesondere maximal 5 ns, andauern.

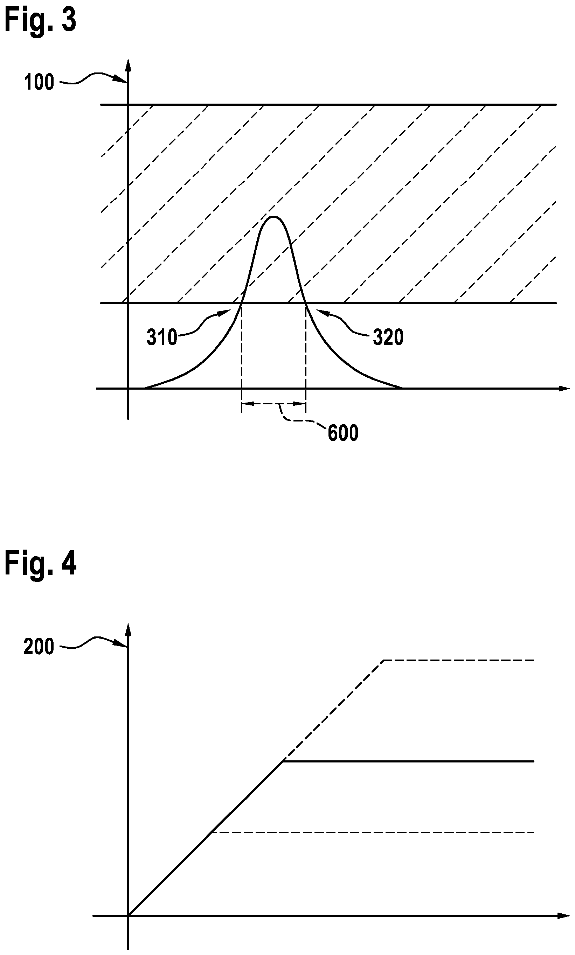

Die Dauer eines Pulses wird auch Pulsbreite 600 (vgl. Figur 3) genannt. Diese ist derjenige Zeitraum, über den der Puls mindestens die halbe Amplitude aufweist. Somit beginnt der Zeitraum damit, dass das Referenzsignal 100 über die halbe Amplitude ansteigt und endet damit, dass das Referenzsignal unter die halbe Amplitude fällt.

Um eine Energie eines Pulses zu bestimmen, ist notwendig, dass die Amplitude und die Pulsbreite 600 bekannt sind. Somit ist zunächst die Amplitude zu bestimmen, um dann die Pulsbreite 600 zu ermitteln. Sobald diese Parameter bekannt sind, kann auf die Energie des Pulses geschlossen werden. Dadurch wiederum ist ermöglicht, die Lichtleistung des Laserlichts zu ermitteln. Insgesamt ist daher erfassbar, ob die Lichtleistung unterhalb eines vordefinierten Grenzwert liegt. Sollte dies nicht der Fall sein, so geht von dem Lidarsystem eine potentielle Gefahr für Menschen, insbesondere für menschliche Augen, aus, weshalb ein Korrigieren der Lichtleitung notwendig ist.

Zum Ermitteln der Amplitude des Referenzsignals 100 ist eine Regelschleife 6 vorhanden. Die Regelschleife 6 umfasst einen Komparator 7 und eine Regeleinheit 8. Der Komparator 7 dient zum Berechnen einer Differenz des Referenzsignals 100 und eines Stellsignals 200. Insbesondere berechnet der Komparator 7 eine Differenz der Amplitude des Referenzsignals 100 und der Amplitude des Stellsignals 200. Diese Differenz soll minimiert werden, insbesondere auf den Wert 0.

Um die Differenz zu minimieren, variiert die Regeleinheit 8 das Stellsignal 200. Somit wird das Stellsignal 200 durch die Regeleinheit 8 an das Referenzsignal 100 angepasst. Insbesondere wird somit eine Amplitude des Referenzsignals 100 durch das Stellsignal 200 abgebildet. Die Amplitude des Stellsignals 200 ist somit ein Maß für die Amplitude des Referenzsignals.

Die Regeleinheit 8 gibt als Antwort auf die von dem Komparator 7 berechnete Differenz ein digitales Signal aus. Dieses digitale Signal wird von einem digital-analog-Wandler 9 in ein analoges Signal, das Stellsignal 200, gewandelt. Somit kann der Komparator 7 das Stellsignal 200 von dem Referenzsignal subtrahieren.

Die Regelschleife 6 benötigt eine Einschwingzeit, um sich einzuschwingen. Darunter ist zu verstehen, dass das Stellsignal 200 auf einen endgültigen Wert konvergiert. Diese Einschwingzeit umfasst insbesondere die Dauer von weniger als zehn Pulsen, insbesondere von maximal fünf Pulsen, des Referenzsignals. Nach dem Einschwingen steht mit dem Stellsignal 200 eine Größe zur Verfügung, die zumindest eine Amplitude des Referenzsignals 100 repräsentiert.

Um die Pulsdauer oder Pulsbreite 600 zu ermitteln wird das Stellsignal 200 in seiner Amplitude halbiert. Dazu ist ein Halbierelement 11 vorhanden. Das so in seiner Amplitude halbierte Stellsignal 200 wird zusammen mit dem Referenzsignal 100 an einen Zusatzkomparator 10 angelegt. Dieser bestimmt die Differenz des in seiner Amplitude halbierten Stellsignals 200 sowie des Referenzsignals 100. Dadurch entsteht ein Pulsbreitensignal 300, das nur solange vorhanden ist, wie die Pulsbreite 600 gemäß obiger Definition. Dies bedeutet, dass eine steigende Flanke des Pulsbreitensignal 300 den Beginn des Pulses anzeigt, eine fallende Flanke hingegen ein Ende des Pulses. Um den Zeitraum zwischen steigender Flanke und fallender Flanke zu ermitteln, ist eine Pulsbreitenabschätzeinheit 13 vorhanden.

Die Pulsbreitenabschätzeinheit 13 ist in Figur 2 gezeigt. Anhand der Pulsbreitenabschätzeinheit 13 ist ermittelbar, welches Vielfache einer vordefinierten Zeiteinheit der Pulsbreite 600 entspricht. Dazu ist eine Vielzahl von Testeinheiten 16 vorhanden. Jede Testeinheit 16 weist ein Verzögerungsglied 14 und einen D-Flipflop 15 auf. Es ist vorgesehen, dass alle Testeinheiten 16 hintereinandergeschaltet sind.

Mittels des Verzögerungsglieds 14 einer Testeinheit 16 ist ein erstes binäres Signal 310 verzögert an einen Daten-Eingang des D-Flipflops 15 der Testeinheit 16 anlegbar. Die Verzögerung ist durch die vordefinierte Zeiteinheit vorgegeben. Gleichzeitig ist ein zweites binäres Signal 320 ohne Verzögerung an einen Tackt-Eingang des D-Flipflops angelegt 15. Auf diese Weise ist das D-Flipflop 15 dann auf den Ausgangswert einer binären 1 umschaltbar, wenn sowohl das erste binäre Signal 310 und das zweite binäre Signal 320 eine binäre 1 anzeigen.

Das erste binäre Signal 310 stellt dar, ob eine ansteigende Flanke des Pulsbreitensignals 300 vorhanden ist. Ist dies der Fall, so beträgt das erste binäre Signal 310 eine binäre 1. Das zweite binäre Signal 320 stellt dar, ob eine fallende Flanke des Pulsbreitensignals 300 vorhanden ist. Somit zeigt der Ausgang des D-Flipflops 15 an, ob zwischen dem Auftreten der steigenden Flank und der fallenden Flanke zumindest die vordefinierte Zeiteinheit liegt.

Wie in Figur 2 gezeigt ist, sind alle Testeinheiten 16 hintereinandergeschaltet. Dies bedeutet insbesondere, alle Verzögerungsglieder 14 hintereinandergeschaltet sind. Somit wird eine Verzögerung des ersten binären Signals 310 kumuliert, während das zweite binäre Signal 320 stets ohne Verzögerung an alle D-Flipflops 15 angelegt ist. Somit lässt sich die Pulsbreite 600 einfach und aufwandsarm bestimmen.

Die Pulsbreite 600 wird durch einen BCD-Zählercode 500 repräsentiert, das die Ausgänge von sämtlichen D-Flipflops 15 aufweist. Anhand des BCD-Zählercodes 500 ist beschrieben, wie vielen vordefinierten Zeiteinheiten die Pulsbreite 600 entspricht. Somit kann die Pulsbreite 600 aufwandsarm ermittelt werden.

Als Ergebnis ist somit die Pulsbreite 600 als auch die Amplitude einfach und aufwandsarm ermittelt, wobei das beschriebene Ausführungsbeispiel insbesondere auf kurze Laserlichtpulse anwendbar ist. Aus der Pulsbreite 600 und der Amplitude lässt sich eine Lichtleistung des Laserlichts berechnen, wodurch die Lichtleistung einfach und aufwandsarm ermittelbar ist. Dies führt zu einer optimalen Überwachung der Funktion des Lidarsystems 2. Insbesondere ist vermeidbar, dass zu hohe Lichtleistungen auftreten, die einen menschlichen Organismus, insbesondere menschliche Augen, schädigen können.

Figur 3 zeigt schematisch einen Verlauf eines Pulses des Referenzsignals 100. In dem Diagramm ist die Ordinatenachse eine elektrische Spannung und die Abszissenachse eine Zeit. In Figur 3 ist außerdem die Pulsbreite 600 gezeigt, wobei hierzu die Lage der steigenden Flanke 310 und die Lage der fallenden Flanke 320 gezeigt ist.

Figur 4 zeigt schematisch einen Verlauf des Stellsignals 200. Das Stellsignal 200 ist insbesondere in konstanter Wert, der von der Regeleinheit 8 eingestellt wird. Somit ist zunächst eine Einschwingphase vorhanden, in der das Stellsignal 200 anwächst, bis das Stellsignal das Referenzsignal erreicht hat. In diesem Fall entspricht der konstante Wert des Stellsignals 200 der Amplitude des Referenzsignals 100. Es ist außerdem in Figur 4 schematisch gezeigt, dass nach dem Einschwingen keine nennenswerten Änderungen an dem Stellsignal 200 vorgenommen werden.

Die in Figur 3 und Figur 4 strichliert gezeigten Bereiche zeigen den maximalen Regelbereich der Regelschleife 6 an. Dieser Bereich ist durch eine limitierte Veränderbarkeit des Stellsignals 200 begrenzt. Somit ist vorgesehen, dass der Regelbereich an die zu erwartenden Pulse des Referenzsignals 100 angepasst ist.

Anstatt des Lichteinfalls auf den Detektor 5 kann auch ein Testsignal 700 in die Überwachungsvorrichtung 1 eingespeist werden. Das Testsignal 700 dient zum Testen der Überwachungsvorrichtung 1 und stellt ein virtuelles Ergebnis des Detektors 5 dar. Somit wird das Testsignal 700 genauso gehandhabt wie das Referenzsignal 100. Dies erlaubt ein ständiges Kontrollieren der Überwachungsvorrichtung 1. Ein Ausfall der Überwachungsvorrichtung 1 oder eine Fehlfunktion der Überwachungsvorrichtung 1 ist somit verhindert.

## Patentansprüche

1. Überwachungsvorrichtung (1) zur Funktionsüberwachung eines Lidarsystems (2) zum Aussenden von Pulsen, umfassend
• einen Detektor (5) zum Detektieren von Laserlicht und Generieren eines Referenzsignals (100) aus dem Laserlicht, und
• eine Regelschleife (6) zum Minimieren einer Differenz zwischen einer Amplitude des Referenzsignals (100) und einer Amplitude eines Stellsignals (200) durch Variieren des Stellsignals (200),
wobei die Regelschleife (6) einen Komparator (7) zum Ermitteln einer Differenz zwischen dem Referenzsignal (100) und dem Stellsignal (200) sowie eine Regeleinheit (8) zum Verändern des Stellsignals (200) in Abhängigkeit der von dem Komparator (7) ermittelten Differenz aufweist, **gekennzeichnet durch** einen Zusatzkomparator (10) zum Ermitteln einer Differenz zwischen der Amplitude des Referenzsignals (100) und einer halben Amplitude des Stellsignals (200), um somit ein Pulsbreitensignal (300) zu bestimmen, das eine Pulsbreite des Referenzsignals (100) anzeigt.

2. Überwachungsvorrichtung (1) nach Anspruch 1, **dadurch gekennzeichnet, dass** die Regeleinheit (8) eingerichtet ist, durch Verändern des Stellsignals (200) die Differenz auf den Wert Null einzustellen.

3. Überwachungsvorrichtung (1) nach Anspruch 1 oder 2, **dadurch gekennzeichnet, dass** die Regeleinheit (8) zum Ausgeben eines digitalen Signals ausgebildet ist, wobei das digitale Signal von einem digital-analog-Wandler (9) in das Stellsignal (200) wandelbar ist.

4. Überwachungsvorrichtung (1) nach einem der Ansprüche 1 bis 3, **gekennzeichnet durch** eine Pulsbreitenabschätzungseinheit (13) zum Zählen einer Anzahl einer vordefinierten Zeiteinheit, die ein Puls des Pulsbreitensignals (300) an der Pulsbreitenabschätzungseinheit (13) anliegt und zum Ausgeben eines BCD-Zählercodes (500), der die Anzahl der vordefinierten Zeiteinheiten anzeigt,
• wobei die Pulsbreitenabschätzungseinheit (13) eine Vielzahl von hintereinandergeschalteten Testeinheiten (16) aufweist,
• wobei jede Testeinheit (16) zum Ausgeben eines binären Signals, ob der Puls nach Abwarten der vordefinierten Zeiteinheit weiterhin an der Pulsbreitenabschätzungseinheit (13) anliegt ausgebildet ist, und
• wobei der BCD-Zählercode (500) aus den binären Signalen der Testeinheiten (16) zusammengesetzt ist.

5. Überwachungsvorrichtung (1) nach Anspruch 4, **dadurch gekennzeichnet, dass** jede Zähleinheit (16) ein Verzögerungsglied aufweist, um jeweils ein binäres Signal, das das Vorliegen einer ansteigenden Flanke des Pulsbreitensignals (300) anzeigt, um die vordefinierte Zeiteinheit verzögert an einen Daten-Eingang eines D-Flipflops (15) anzulegen, wobei ein binäres Signal, das das Vorliegen einer fallenden Flanke des Pulsbreitensignals (300) anzeigt, unverzögert an einen Takt-Eingang des D-Flipflops (15) angelegt ist, und wobei die Ausgänge aller vorhandener D-Flipflops (15) den BCD-Zählercode (500) bilden.

6. Überwachungsvorrichtung (1) nach einem der vorhergehenden Ansprüche,
**dadurch gekennzeichnet, dass** der Detektor (5) zum Generieren eines charakteristischen Stromsignals aus dem Laserlicht ausgebildet ist, wobei das Stromsignal durch einen Transimpedanzwandler (12) zu dem Referenzsignal (100) wandelbar ist.

7. Überwachungsvorrichtung (1) nach einem der vorhergehenden Ansprüche,
**dadurch gekennzeichnet, dass** der Detektor (5) eine pin-Diode und/oder Avalanche-Photodiode umfasst.

8. Lidarsystem (2) umfassend eine Laserlichtquelle (3), eine Auskopplungseinheit (4) und eine Überwachungsvorrichtung (1) nach einem der vorhergehenden Ansprüche, wobei Laserlicht von der Laserlichtquelle (3) durch die Auskopplungseinheit (4) zumindest teilweise zu der Überwachungsvorrichtung (1) leitbar ist.

## Claims

1. Monitoring apparatus (1) for monitoring the function of a lidar system (2) for emitting pulses, comprising
• a detector (5) for detecting laser light and generating a reference signal (100) from the laser light, and
• a control loop (6) for minimizing a difference between an amplitude of the reference signal (100) and an amplitude of a corrective signal (200) by varying the corrective signal (200),
wherein the control loop (6) has a comparator (7) for determining a difference between the reference signal (100) and the corrective signal (200) and a control unit (8) for changing the corrective signal (200) on the basis of the difference determined by the comparator (7), **characterized by** an additional comparator (10) for determining a difference between the amplitude of the reference signal (100) and half the amplitude of the corrective signal (200) in order to therefore determine a pulse width signal (300) which indicates a pulse width of the reference signal (100).

2. Monitoring apparatus (1) according to Claim 1, **characterized in that** the control unit (8) is configured to set the difference to the value of zero by changing the corrective signal (200).

3. Monitoring apparatus (1) according to Claim 1 or 2, **characterized in that** the control unit (8) is designed to output a digital signal, wherein the digital signal can be converted into the corrective signal (200) by a digital/analogue converter (9).

4. Monitoring apparatus (1) according to one of Claims 1 to 3, **characterized by** a pulse width estimation unit (13) for counting a number of a predefined time unit, which applies a pulse of the pulse width signal (300) to the pulse width estimation unit (13), and for outputting a BCD counter code (500) which indicates the number of predefined time units,
• wherein the pulse width estimation unit (13) has a multiplicity of test units (16) connected in series,
• wherein each test unit (16) is designed to output a binary signal indicating whether the pulse is still present at the pulse width estimation unit (13) after waiting for the predefined time unit, and
• wherein the BCD counter code (500) is composed of the binary signals from the test units (16).

5. Monitoring apparatus (1) according to Claim 4, **characterized in that** each counting unit (16) has a delay element in order to respectively apply a binary signal, which indicates the presence of a rising edge of the pulse width signal (300), to a data input of a D-type flip-flop (15) in a manner delayed by the predefined time unit, wherein a binary signal which indicates the presence of a falling edge of the pulse width signal (300) is applied to a clock input of the D-type flip-flop (15) without delay, and wherein the outputs of all existing D-type flip-flops (15) form the BCD counter code (500) .

6. Monitoring apparatus (1) according to one of the preceding claims, **characterized in that** the detector (5) is designed to generate a characteristic current signal from the laser light, wherein the current signal can be converted to the reference signal (100) by means of a transimpedance converter (12).

7. Monitoring apparatus (1) according to one of the preceding claims, **characterized in that** the detector (5) comprises a pin diode and/or an avalanche photodiode.

8. Lidar system (2) comprising a laser light source (3), an output coupling unit (4) and a monitoring apparatus (1) according to one of the preceding claims, wherein laser light from the laser light source (3) can be at least partially guided to the monitoring apparatus (1) by the output coupling unit (4).

## Revendications

1. Dispositif de surveillance (1) destiné à surveiller le fonctionnement d'un système lidar (2) destiné à émettre des impulsions, ledit dispositif de surveillance comprenant
• un détecteur (5) destiné à détecter une lumière laser et à générer un signal de référence (100) à partir de la lumière laser, et
• une boucle de régulation (6) destinée à minimiser une différence entre une amplitude du signal de référence (100) et une amplitude d'un signal de réglage (200) par variation du signal de réglage (200),
la boucle de régulation (6) comportant un comparateur (7) destiné à déterminer une différence entre le signal de référence (100) et le signal de réglage (200) et une unité de régulation (8) destinée à modifier le signal de réglage (200) en fonction de la différence déterminée par le comparateur (7), **caractérisé par** un comparateur supplémentaire (10) destiné à déterminer une différence entre l'amplitude du signal de référence (100) et la moitié de l'amplitude du signal de réglage (200) afin de déterminer ainsi un signal de largeur d'impulsion (300) qui indique une largeur d'impulsion du signal de référence (100).

2. Dispositif de surveillance (1) selon la revendication 1, **caractérisé en ce que** l'unité de régulation (8) est conçue pour régler la différence à la valeur zéro en modifiant le signal de réglage (200).

3. Dispositif de surveillance (1) selon la revendication 1 ou 2, **caractérisé en ce que** l'unité de régulation (8) est conçue pour délivrer un signal numérique, le signal numérique pouvant être converti en signal de réglage (200) par un convertisseur numérique-analogique (9).

4. Dispositif de surveillance (1) selon l'une des revendications 1 à 3, **caractérisé par** une unité d'estimation de largeur d'impulsion (13) destinée à compter un nombre d'une unité de temps prédéfinie, qui applique une impulsion du signal de largeur d'impulsion (300) à l'unité d'estimation de largeur d'impulsion (13), et à délivrer un code de compteur BCD (500) qui indique le nombre des unités de temps prédéfinies,
• l'unité d'estimation de largeur d'impulsion (13) comportant un grand nombre d'unités de test (16) montées en série,
• chaque unité de test (16) étant conçue pour délivrer un signal binaire si l'impulsion est toujours appliqué à l'unité d'estimation de largeur d'impulsion (13) après avoir attendu l'unité de temps prédéfinie, et
• le code de compteur BCD (500) étant composé des signaux binaires des unités de test (16).

5. Dispositif de surveillance (1) selon la revendication 4, **caractérisé en ce que** chaque unité de comptage (16) comporte un élément à retard destiné à appliquer un signal binaire, qui indique la présence d'un front montant du signal de largeur d'impulsion (300), à une entrée de données d'une bascule D (15) avec un retard de l'unité de temps prédéfinie, un signal binaire qui indique la présence d'un front descendant du signal de largeur d'impulsion (300) étant appliqué sans retard à une entrée d'horloge de la bascule D (15), et les sorties de toutes les bascules D (15) existantes formant le code de compteur BCD (500).

6. Dispositif de surveillance (1) selon l'une des revendications précédentes, **caractérisé en ce que** le détecteur (5) est conçu pour générer un signal de courant caractéristique à partir de la lumière laser, le signal de courant pouvant être converti en le signal de référence (100) par un convertisseur à transimpédance (12).

7. Dispositif de surveillance (1) selon l'une des revendications précédentes, **caractérisé en ce que** le détecteur (5) comprend une diode pin et/ou une photodiode à avalanche.

8. Système lidar (2) comprenant une source de lumière laser (3), une unité de sortie par couplage (4) et un dispositif de surveillance (1) selon l'une des revendications précédentes, la lumière laser de la source de lumière laser (3) pouvant être guidée au moins partiellement à travers l'unité de sortie par couplage (4) jusqu'au dispositif de surveillance (1).
